# EUROPEAN PATENT APPLICATION

(11) **EP 4 819 222 A1**
(43) Date of publication of application: **07.10.2026**
(21) Application number: 24897467.7
(22) Date of filing: 22.11.2024
(51) Int. Cl.: H01M 4/136, H01M 4/58, H01M 4/62

(54) **POSITIVE ELECTRODE FOR LITHIUM-ION SECONDARY BATTERY, AND LITHIUM-ION SECONDARY BATTERY**

(30) Priority: 01.12.2023 JP 2023204101
(71) Applicant: Eliiy Power Co., Ltd., Tokyo 141-0032 (JP)
(72) Inventor: KATORI, Takuya, Tokyo 141-0032 (JP); SAWANISHI, Keisuke, Tokyo 141-0032 (JP); ITO, Daichi, Tokyo 141-0032 (JP)
(74) Representative: Savi, Massimiliano
(86) International application number: PCT/JP2024/041480
(87) International publication number: WO 2025/115781

(57) **Abstract**

The present invention provides a positive electrode for a lithium-ion secondary battery that can suppress the occurrence of a crack or wrinkle in the positive electrode active material layer. The positive electrode for a lithium-ion secondary battery according to the present invention includes a current collector and a positive electrode active material layer provided on the current collector, the positive electrode active material layer includes lithium iron phosphate particles, an aqueous polymer binder derived from latex, and sodium carboxymethyl cellulose or calcium carboxymethyl cellulose, the aqueous polymer binder and the sodium carboxymethyl cellulose or calcium carboxymethyl cellulose constitute a binder composite, and the binder composite has an elastic modulus within a range of 30 to 100 MPa.

## Description

### TECHNICAL FIELD

The present invention relates to a positive electrode for a lithium-ion secondary battery and a lithium-ion secondary battery.

### BACKGROUND ART

A positive electrode active material layer of a lithium ion battery is usually produced by applying a slurry containing positive electrode active material particles, a PVdF-based binder, N-methylpyrrolidone, and a conductive agent onto a current collector, and drying the applied layer. However, N-methylpyrrolidone is included in a list of restricted substances under the REACH Regulation due to concerns about its toxicity.

As a method for producing a positive electrode active material layer without using N-methylpyrrolidone, there is known a method in which a slurry including positive electrode active material particles, an aqueous binder, a conductive agent, and water is applied onto a current collector and the resulting coating layer is dried (see, for example, Patent Literature 1).

### PRIOR ART DOCUMENT

### PATENT DOCUMENT

Patent Document 1: Jpn. Pat. Appln. KOKAI Publication No. 2017-091789

### SUMMARY OF THE INVENTION

### PROBLEMS TO BE SOLVED BY THE INVENTION

However, when a conventional positive electrode active material slurry using water as a dispersion medium is thickly applied onto a current collector and the coating layer is dried, cracks and wrinkles occur in the positive electrode active material layer (such as a positive electrode active material layer having a thickness of 150 µm or more). When cracks occur in the positive electrode active material layer, the positive electrode active material layer is prone to peel from the current collector, which is disadvantageous for producing a battery. Further, when wrinkles occur in the positive electrode active material layer, distortion occurs in the positive electrode, which is disadvantageous for producing a battery.

The present invention has been made in view of such circumstances and provides a positive electrode for a lithium-ion secondary battery that can suppress the occurrence of a crack or wrinkle in the positive electrode active material layer.

### SOLUTIONS TO THE PROBLEMS

The present invention provides a positive electrode for a lithium-ion secondary battery, the positive electrode including a current collector and a positive electrode active material layer provided on the current collector, the positive electrode active material layer including lithium iron phosphate particles, an aqueous polymer binder derived from latex, and CMC (sodium carboxymethyl cellulose or calcium carboxymethyl cellulose), the aqueous polymer binder and the CMC constituting a binder composite, and the binder composite having an elastic modulus within a range of 30 to 100 MPa.

In addition, the present invention also provides a lithium-ion secondary battery that includes the positive electrode of the present invention, a negative electrode, a separator, and a non-aqueous electrolyte.

### EFFECTS OF THE INVENTION

According to the present invention, occurrence of a crack or wrinkle in the positive electrode active material layer can be suppressed, and peeling of the positive electrode active material layer from the current collector can also be suppressed.

According to the present invention, the thickness of the positive electrode active material layer can be increased, whereby the amount of positive electrode active material included in the lithium-ion secondary battery can be increased, resulting in an increase in battery capacity.

The lithium-ion secondary battery including the positive electrode of the present invention can exhibit a large battery capacity. This has been demonstrated by experiments conducted by the present inventors.

### BRIEF DESCRIPTION OF THE DRAWINGS

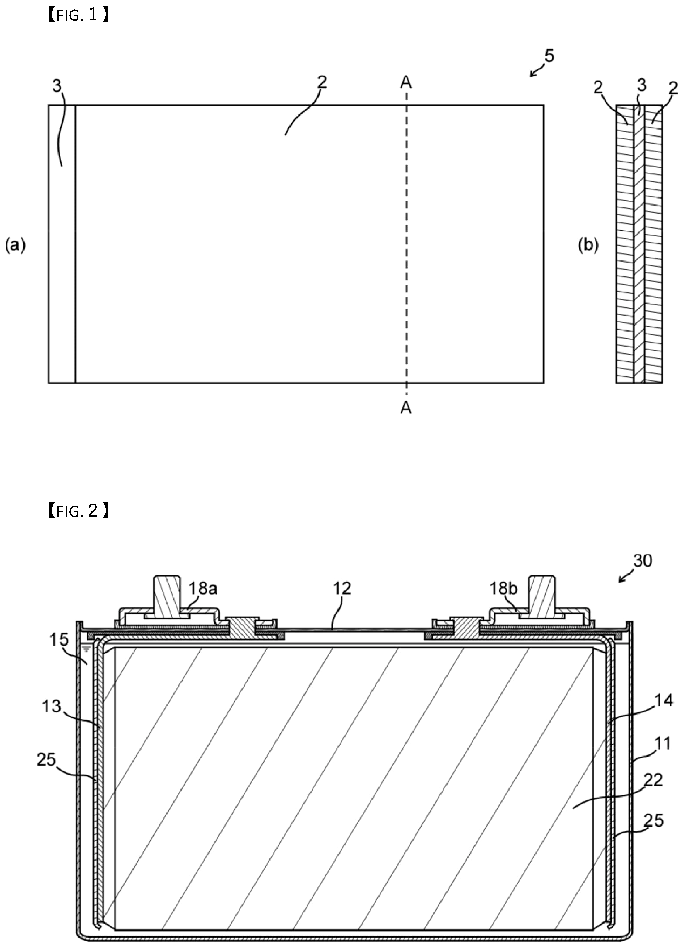

FIG. 1 (a) is a schematic plan view of a positive electrode for a lithium-ion secondary battery according to an embodiment of the present invention, and FIG. 1 (b) is a schematic cross-sectional view of the positive electrode taken along a broken line A-A in FIG. 1 (a).
FIG. 2 is a schematic cross-sectional view of a lithium-ion secondary battery according to an embodiment of the present invention.
FIG. 3 is a schematic structural view of an electrode assembly included in the lithium-ion secondary battery according to an embodiment of the present invention.

### EMBODIMENT OF THE INVENTION

Hereinafter, an embodiment of the present invention will be described with reference to the drawings. The configuration shown in the drawings and the following description is just an example, and the scope of the present invention is not limited to the configuration shown in the drawings or the following description.

A positive electrode 5 for a lithium-ion secondary battery according to the present embodiment includes a current collector 3 and a positive electrode active material layer 2 provided on the current collector 3, the positive electrode active material layer 2 includes lithium iron phosphate particles, an aqueous polymer binder derived from latex, and CMC (sodium carboxymethyl cellulose or calcium carboxymethyl cellulose), the aqueous polymer binder and the CMC constitute a binder composite, and the binder composite has an elastic modulus within a range of 30 to 100 MPa.

A lithium-ion secondary battery 30 according to the present embodiment includes the positive electrode 5 according to the present embodiment, a negative electrode 32, a separator 34, and a non-aqueous electrolyte 15.

The positive electrode 5 for a lithium-ion secondary battery is the positive electrode 5 included in the lithium-ion secondary battery 30 or the positive electrode 5 used for producing the lithium-ion secondary battery 30.

The positive electrode 5 for a lithium-ion secondary battery includes the positive electrode current collector 3 and the porous positive electrode active material layer 2 provided on the positive electrode current collector 3.

The positive electrode current collector 3 is a sheet serving as a substrate on which the positive electrode active material layer 2 is to be provided, and the positive electrode current collector 3 is a conductor that electrically connects a positive electrode connection member 13 and the positive electrode active material layer 2 to each other. The positive electrode current collector 3 is, for example, an aluminum foil. The positive electrode connection member 13 is electrically connected to an external connection terminal 18a. The positive electrode active material layer 2 may be provided on one side of the positive electrode current collector 3 or may be provided on both sides of the positive electrode current collector 3.

The positive electrode active material layer 2 is a layer containing a positive electrode active material. A thickness of the positive electrode active material layer 2 (after pressing) may be 150 µm or more. This can increase the amount of the positive electrode active material included in the positive electrode 5, thereby increasing battery capacity of the lithium-ion secondary battery 30.

The positive electrode active material layer 2 includes the lithium iron phosphate particles serving as a positive electrode active material, the latex-derived aqueous polymer binder, and CMC. In addition, the positive electrode active material layer 2 can include a conductive agent. The aqueous polymer binder and CMC constitute the binder composite.

The lithium iron phosphate particles are particles of lithium iron phosphate (LiFePO₄) serving as the positive electrode active material. The lithium iron phosphate particles may have a conductive film on the surface. This can improve conductivity of the surfaces of the fine particles on which an intercalation reaction is progressing, and can reduce the internal resistance of the positive electrode 5. The conductive film is, for example, a carbon film. The lithium iron phosphate particles may be included in the positive electrode active material layer 2 as secondary particles. The secondary particles of lithium iron phosphate can have an average particle size of 10 µm or more and 60 µm or less. The average particle size can be calculated by measuring particle sizes of 100 secondary particles randomly selected in a cross-sectional photograph of the positive electrode active material layer 2 and averaging these particle sizes.

The conductive agent is, for example, fine particles of furnace black, acetylene black, hard carbon, and soft carbon. By containing the conductive agent, the positive electrode active material layer 2 can improve conductivity and reduce the internal resistance of the positive electrode 5.

The latex-derived aqueous polymer binder is a polymer binder that can be colloidally dispersed in an aqueous dispersion medium. The aqueous polymer binder constitutes the binder composite together with CMC. The aqueous polymer binder is, for example, an acrylic polymer binder, styrene-butadiene rubber (SBR), or the like. By using such an aqueous polymer binder, it is possible to use water or an aqueous solution as the dispersion medium for the positive electrode active material slurry used for forming the positive electrode active material layer 2. A glass transition temperature Tg of a polymer compound serving as the aqueous polymer binder is, for example, 20°C or less, preferably 10°C or less, and more preferably 0°C or less. This allows the aqueous polymer binder to exhibit flexibility.

Inclusion of the aqueous polymer binder in the positive electrode active material layer 2 can suppress peeling of the positive electrode active material layer 2 from the positive electrode current collector 3 and cracking of the positive electrode active material layer 2.

An acrylic rubber included in the acrylic polymer binder has a specific gravity of 1.1. Hardness of the acrylic rubber measured in accordance with JIS standards ranges from 40 to 90. A tensile strength of the acrylic rubber is 70 to 120 kg/cm², an elongation of the acrylic rubber is 100 to 600%, and volume resistivity of the acrylic rubber is 10⁸ to 10¹⁰ Ω/cm.

Styrene-butadiene rubber (SBR) has a specific gravity of 0.94. Hardness of the SBR measured in accordance with JIS standards ranges from 30 to 100. A tensile strength of the SBR is 50 to 200 kg/cm², an elongation of the SBR is 100 to 800%, and volume resistivity of the SBR is 10¹⁰ to 10¹⁵ Ω/cm.

CMC (sodium carboxymethyl cellulose or calcium carboxymethyl cellulose) functions as a binder for the positive electrode active material layer 2 and is also a substance capable of controlling the viscosity of the positive electrode active material slurry used for forming the positive electrode active material layer 2. CMC constitutes the binder composite together with the aqueous polymer binder. By controlling the type and amount of CMC, the flexibility, peel strength, and the like of the positive electrode active material layer 2 can be adjusted. Also, inclusion of CMC in the positive electrode active material slurry can increase the viscosity of the positive electrode active material slurry and enable the positive electrode active material layer 2 to have a uniform thickness. As a result, the positive electrode active material slurry can be applied in a thick coating, and the positive electrode active material layer 2 having a large thickness (for example, a thickness of 150 µm or more (after pressing)) can be formed.

The binder composite composed of the aqueous polymer binder and CMC in the positive electrode active material layer 2 has an elastic modulus ranging from 30 to 100 MPa, and the upper limit is preferably 85 MPa. By setting the elastic modulus of the binder composite within the aforementioned range, a favorable positive electrode active material layer 2 can be formed. When the elastic modulus of the binder composite exceeds 85 MPa, formation of a flexible positive electrode active material layer becomes difficult. Further, when the elastic modulus of the binder composite is less than 30 MPa, problems arise in maintaining the shape of the positive electrode active material layer 2. When the elastic modulus of the binder composite was 25 MPa, portions of the electrode after drying that were in contact with each other were transferred during roll winding, resulting in non-uniform thickness of the positive electrode active material layer 2.

The elastic modulus of the binder composite composed of the aqueous polymer binder and CMC included in the positive electrode active material layer 2 can be measured, for example, by preparing a binder composite having the same composition as that contained in the positive electrode active material layer 2 and performing a tensile test on the prepared binder composite.

The binder composite in the positive electrode active material layer 2 exhibits an elongation in the elastic region of 10% or more. By setting the elongation in the elastic region to this range 10% or more, a favorable positive electrode active material layer 2 can be formed. When the elongation is less than 10%, cracking and peeling are likely to occur. Although there is no particular upper limit for the elongation, it is preferably 30% or less.

The positive electrode active material layer 2 can be formed, for example, by mixing and kneading the lithium iron phosphate particles, the conductive agent, a latex of the polymer binder (an aqueous emulsion in which a polymer serving as a binder is dispersed in a colloidal state), CMC, and water to prepare the positive electrode active material slurry, applying the slurry onto the positive electrode current collector 3, and drying the coating layer. Further, the positive electrode active material layer 2 may be pressed. In the pressing treatment, for example, pressure may be applied to the positive electrode active material layer 2 such that a porosity of the positive electrode active material layer 2 falls within a range of 10% to 40%.

A negative electrode 32 is an electrode including a porous negative electrode active material layer 36. The negative electrode active material layer 36 is, for example, a porous layer including a negative electrode active material provided on a sheet-shaped negative electrode current collector 38. The negative electrode current collector 38 is electrically connected to a negative electrode connection member 14. The negative electrode connection member 14 is electrically connected to an external connection terminal 18b. The negative electrode current collector 38 is, for example, a copper foil.

The negative electrode active material is a substance that is directly involved in the transfer of electrons accompanying charge transfer in the negative electrode. The negative electrode active material is, for example, graphite, partially graphitized carbon, hard carbon, soft carbon, lithium titanate (LTO), or a Sn alloy. The negative electrode active material layer 36 can include one or more of these negative electrode active materials, either alone or in combination.

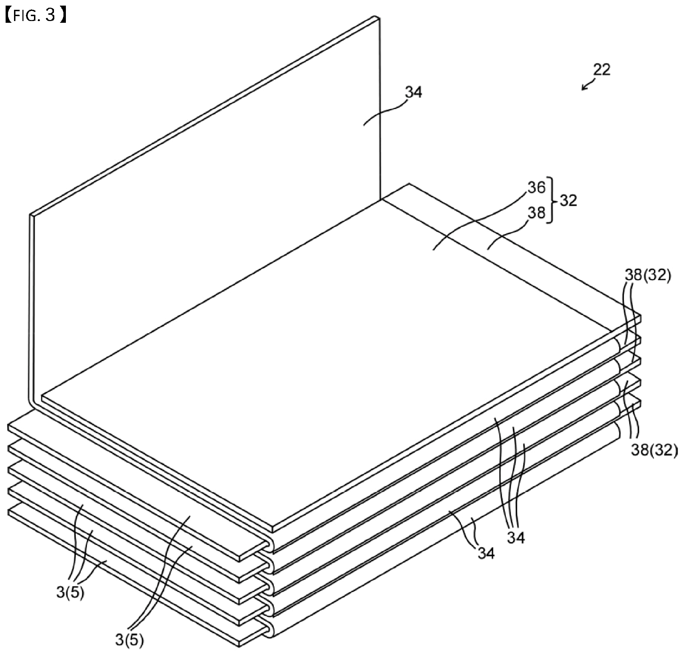

The separator 34 has a sheet shape and is disposed between the positive electrode 5 and the negative electrode 32. Further, the separator 34 can configure, together with the positive electrodes 5 and the negative electrodes 32, an electrode assembly 22 as shown in FIG. 3. By providing the separator 34, it is possible to prevent a short-circuit current from flowing between the positive electrode 5 and the negative electrode 32.

There is no particular limitation on the separator 34 if a short-circuit current can be prevented from flowing and if ions conducting between the positive electrode and the negative electrode can pass through the separator 10, and a microporous film of polyolefin, a cellulose sheet, or an aramid sheet can be used, for example. In addition, the separator 34 may be a nonwoven fabric including at least one of cellulose fiber, polyester fiber, polypropylene fiber, polyacrylonitrile fiber, and polyethylene terephthalate fiber.

As shown in FIG. 3, an electrode assembly 22 may have a structure in which a plurality of positive electrodes 5 and a plurality of negative electrodes 32 are stacked such that the positive electrodes 5 and the negative electrodes 32 are alternately disposed. In addition, the electrode assembly 22 may have a structure in which the separator 34 is disposed between the adjacent positive electrode 5 and negative electrode 32.

As the solvent for the non-aqueous electrolyte 15, carbonates, lactones, ethers, esters, ionic liquids, and the like can be used, and two or more of these solvents can also be mixed and used. In particular, a cyclic carbonate and a chain carbonate of these solvents are preferably mixed and used. The non-aqueous electrolyte 15 is, for example, a solution in which a lithium salt solute such as LiCF₃SO₃, LiAsF₆, LiClO₄, LiBF₄, LiPF₆, LiBOB, LiN(CF₃SO₂)₂, or LiN(C₂F₅SO₂) is dissolved in an organic solvent. If necessary, additives such as VC (vinylene carbonate), PS (propane sultone), VEC (vinyl ethyl carbonate), PRS (propene sultone), and a flame retardant may be blended alone or in combination of two or more.

A battery case 11 is a battery outer casing that houses the electrode assembly 22 (including the positive electrode 5, the negative electrode 32, and the separator 34) and the non-aqueous electrolyte 15. The battery case 11 may be formed in a pouch shape by welding a laminate film at a welding portion. In this case, the lithium-ion secondary battery 30 is a pouch battery. Alternatively, the battery case 11 may be a metal case or a hard resin case. The battery case 11 may have a lid member 12.

Measurement of Elastic Modulus and Elongation, and Production of Positive Electrode

### (Test Method)

The elastic modulus and elongation of the binder composite were measured in accordance with JIS K 7127 (tensile test).

A sample piece prepared was set on the arms of a tensile testing machine having an arm spacing of 5 to 10 mm, and a tensile test was performed at a pulling speed of 5 mm/min. Based on the measurement results, a graph was prepared using load as the vertical axis and displacement as the horizontal axis, and the vertical and horizontal axes were converted into stress (load/cross-sectional area) and elongation (displacement/arm spacing), respectively, to obtain an S-S curve. The elastic modulus was calculated from the initial slope of the S-S curve, and the elongation in the elastic region was determined from the point of deviation from linearity of the curve.

### (Production of Sample Pieces)

A binder, sodium carboxymethyl cellulose (CMC), and pure water (dispersion medium) were kneaded to prepare binder composite solutions for Samples 1 to 9, 14, and 15. Further, CMC and a dispersion medium were kneaded to prepare binder solutions for Samples 10 to 13. The kneaded binder composite solution or binder solution was applied onto a PET sheet using a bar coater (Gap: 1 mm), and the coating layer was dried at 95°C to produce a binder composite or a binder body. The drying condition for the coating layer is preferably close to the drying condition for the coating layer of the positive electrode active material slurry, and is preferably 80 to 110°C. The binder composite or the binder body used in the present measurement was obtained by drying the coating film at 95°C and then further drying the coating film under vacuum for 8 hours. The dried binder composite or binder body was peeled from the PET sheet and cut into an appropriate size to produce a sample piece. Tables 1 and 2 show the types of the binder and CMC and the weight ratio between the binder and CMC after drying. Tables 1 and 2 also show the width, length, and thickness values of the sample piece. The effective sample length is the arm spacing at the time when a tensile load starts to be applied to the sample piece. The sample piece including only the binder and not including CMC could not be produced.

### (Positive Electrode)

Positive electrodes of Samples 1 to 15 corresponding to the binder composites or binder bodies of Samples 1 to 15 were produced. Specifically, lithium iron phosphate (LiFePO₄) powder (90 parts by weight), a conductive agent (10 parts by weight of acetylene black), CMC, the binder, and pure water (dispersion medium) were kneaded to prepare positive electrode active material slurries for Samples 1 to 9, 14, and 15. Further, lithium iron phosphate (LiFePO₄) powder (90 parts by weight), the conductive agent (10 parts by weight of acetylene black), CMC, and pure water (dispersion medium) were kneaded to prepare positive electrode active material slurries for Samples 10 to 13. As the binder and CMC, those shown in Tables 1 and 2 were used. Further, the CMC and the binder were added to the mixture such that the ratio (a:b) of the weight *a* of the solid content of CMC to the weight *b* of the solid content of the binder was the weight ratio shown in Tables 1 and 2. The prepared positive electrode active material slurry was applied onto aluminum foil (current collector), and the coating film was dried to prepare the positive electrodes of Samples 1 to 15.

**[Table 1]**

| | CMC | Binder | Weight Ratio of CMC and Binder | Thickness [µm] | Width [mm] | Effective Sample Length [mm] | Elastic Modulus [Mpa] | Elongation in Elastic Region [%] | |
|---|---|---|---|---|---|---|---|---|---|
| Sample 1 | BSH6 | XG4015 | 1:3 | 37 | 15 | 9.3 | 83.2 | 11.5 | Working Example |
| | | | | 37 | 15 | 6.4 | 65.4 | 11.4 | |
| | | | | 37 | 15 | 4.7 | 33.9 | 20.1 | |
| Sample 2 | F350HC | XG4015 | 1:3 | 28 | 15 | 8.7 | 152.7 | 7.1 | Comparative Example |
| | | | | 28 | 15 | 8.2 | 155.1 | 7.2 | |
| | | | | 28 | 15 | 5 | 136.8 | 7.1 | |
| Sample 3 | EP | XG4015 | 1:3 | 28 | 15 | 7.8 | 199.9 | 8.0 | Comparative Example |
| | | | | 28 | 15 | 8 | 169.7 | 8.0 | |
| | | | | 28 | 15 | 5.2 | 153.5 | 8.0 | |
| Sample 4 | BSH6 | BEVEL012 | 1:3 | 35 | 15 | 6.274 | 53.36 | 13.1 | Working Example |
| | | | | 35 | 15 | 11 | 73.56 | 11.0 | |
| | | | | 35 | 15 | 6.76 | 50.97 | 10.5 | |
| Sample 5 | F350HC | BEVEL012 | 1:3 | 36 | 15 | 11 | 61.88 | 11.0 | Working Example |
| | | | | 36 | 15 | 11 | 49.33 | 13.2 | |
| Sample 6 | EP | BEVEL012 | 1:3 | 39 | 15 | 9 | 61.75 | 12.9 | Working Example |
| | | | | 39 | 15 | 10.5 | 51.14 | 12.9 | |
| Sample 7 | BSH6 | AXA391 | 1:3 | 34 | 15 | 3.5 | 32.1 | 17.4 | Working Example |
| | | | | 34 | 15 | 4 | 36.9 | 17.8 | |
| | | | | 34 | 15 | 5.5 | 48.5 | 16.2 | |
| Sample 8 | F350HC | AXA391 | 1:3 | 39 | 15 | 6.5 | 39.1 | 12.7 | Working Example |
| | | | | 39 | 15 | 6.5 | 53.4 | 16.9 | |
| | | | | 39 | 15 | 6.5 | 54.4 | 13.0 | |
| Sample 9 | EP | AXA391 | 1:3 | 41 | 15 | 7 | 56.0 | 12.1 | Working Example |
| | | | | 41 | 15 | 6 | 52.2 | 15.6 | |
| | | | | 41 | 15 | 8.5 | 79.5 | 10.5 | |
| Sample 10 | BSH6 | --- | --- | 13 | 15 | 6 | 671 | 8.0 | Comparative Example |
| | | | | 13 | 15 | 7 | 588 | 8.2 | |
| | | | | 13 | 15 | 9.5 | 635 | 7.3 | |
| Sample 11 | F350HC | --- | --- | 15 | 15 | 6 | 319 | 10.4 | Comparative Example |
| | | | | 15 | 15 | 3.6 | 288 | 13.2 | |
| | | | | 15 | 15 | 6.2 | 202 | 20.8 | |
| Sample 12 | EP | --- | --- | 17 | 15 | 6 | 393 | 8.2 | Comparative Example |
| | | | | 17 | 15 | 8.5 | 538 | 7.2 | |
| Sample 13 | BSH12 | --- | --- | 34 | 15 | 12 | 1208 | 7.0 | Comparative Example |
| | | | | 34 | 15 | 5 | 299 | 7.0 | |
| | | | | 34 | 15 | 10.7 | 513 | 4.5 | |
| | | | | 34 | 15 | 4 | 304 | 8.1 | |

**[Table 2]**

| | CMC | Binder | Weight Ratio of CMC and Binder | Thickness [µm] | Width [mm] | Effective Sample Length [mm] | Elastic Modulus [Mpa] | Elongation in Elastic Region [%] | |
|---|---|---|---|---|---|---|---|---|---|
| Sample 14 | BSH6 | AXA391 | 1:1 | 20 | 15 | 5.5 | 148 | 14.0 | Comparative Example |
| | | | | 20 | 15 | 4 | 137 | 12.9 | |
| Sample 15 | BSH6 | AL1002 | 1:3 | 35 | 15 | 8.3 | 465 | 3.6 | Comparative Example |
| | | | | 35 | 15 | 7.5 | 670 | 0.8 | |
| | | | | 35 | 15 | 5.5 | 350 | 0.6 | |

As the CMC,
sodium carboxymethyl cellulose (CMC) BSH6 manufactured by DKS Co. Ltd. (degree of etherification: 0.65 to 0.75; viscosity of a 1% aqueous CMC solution at 25°C: 3000 to 4000 mPa*s; abbreviation: BSH6),
   CMC BSH12 manufactured by DKS Co. Ltd. (average degree of polymerization: 1600 to 1800; average molecular weight: 330,000 to 360,000; degree of etherification: 0.65 to 0.75; viscosity of a 1% aqueous CMC solution at 25°C: 6000 to 8000 mPa*s; abbreviation: BSH12),
CMC EP manufactured by DKS Co. Ltd. (degree of etherification: 0.90 to 0.96; viscosity of a 1% aqueous CMC solution at 25°C: 2500 mPa*s or more; abbreviation: EP), or
CMC F350HC manufactured by Nippon Paper Industries Co., Ltd. (average degree of polymerization: 1400 (F300HC); average molecular weight: 330,000 (F300HC); degree of etherification: 0.8 to 1.0; viscosity of a 1% aqueous CMC solution at 25°C: 2500 to 4000 mPa*s; abbreviation: F350HC) was used.

As the binder,
an acrylic polymer binder AXA391 manufactured by Zeon Corporation (latex; active ingredient concentration: 40 wt%; glass transition temperature (Tg): -35°C; pH: 7 to 9; B-type viscosity: 5 to 50 cP; average particle size: 180 µm; particle size distribution: peak at 170 µm (100 to 500 µm); abbreviation: AXA391),
an acrylic polymer binder BEVEL012 manufactured by TOYO INK CO., LTD. (latex; active ingredient concentration: 40.3 wt; glass transition temperature (Tg): -25°C; particle size distribution: peaks at 15 µm and 0.16 µm; abbreviation: BEVEL012),
   a styrene-butadiene rubber (SBR) XG4015 manufactured by NIPPON A&L INC. (latex; active ingredient concentration: 48.3 wt%; glass transition temperature: -10°C; pH: 7.3; B-type viscosity: 68 cP; particle size distribution: peak at 150 µm (100 to 250 µm); abbreviation: XG4015), or
an SBR AL1002 manufactured by NIPPON A&L INC. (latex; active ingredient concentration: 48.3 wt%; glass transition temperature: 45°C; pH: 6.4; B-type viscosity: 148 cP; particle size distribution: peak at 130 µm (80 to 200 µm); abbreviation: AL1002) was used.

### (Sample 1: Working Example)

The binder composite formed using the slurry of Sample 1 including XG4015 (SBR) as the binder and BSH6 as CMC had an elastic modulus in the range of 30 MPa to 85 MPa, and an elongation in the elastic region of 10% or more. In addition, a positive electrode active material layer (thickness: 200 µm) was produced using the positive electrode active material slurry of Sample 1 corresponding to the binder composite of Sample 1. As a result, no cracks or wrinkles were observed in the positive electrode active material layer.

### (Samples 2 and 3: Comparative Examples)

The binder composite formed using the slurry of Sample 2 or 3 including XG4015 (SBR) as the binder and F350HC or EP as CMC had an elastic modulus of 100 MPa or more, and an elongation in the elastic region of 10% or less. In addition, a positive electrode active material layer (thickness: 200 µm) was produced using the positive electrode active material slurry of Sample 2 or 3 corresponding to the binder composite of Sample 2 or 3, respectively. As a result, cracks were observed in the positive electrode active material layer. This is considered to be attributable to the excessively high elastic modulus and excessively low elongation of the binder composite.

In addition, agglomerates were observed in the positive electrode active material layers formed using the slurries of Samples 1 to 3.

### (Samples 4, 5, and 6: Working Examples)

The binder composite formed using the slurry of Sample 4, 5, or 6 including BEVEL012 (acrylic polymer binder) as the binder and BSH6, F350HC, or EP as CMC had an elastic modulus in the range of 30 MPa to 85 MPa, and an elongation in the elastic region of 10% or more. In addition, positive electrode active material layers (thickness: 200 µm) were produced using the positive electrode active material slurries of Samples 4, 5, and 6 corresponding to the binder composites of Sample 4, 5, and 6, respectively. As a result, no cracks or wrinkles were observed in the positive electrode active material layers.

In addition, there was little variation in the thicknesses of the positive electrode active material layers formed using the slurries of Samples 4 to 6.

### (Samples 7, 8, and 9: Working Examples)

The binder composite formed using the slurry of Sample 7, 8, or 9 including AXA391 (acrylic polymer binder) as the binder and BSH6, F350HC, or EP as CMC had an elastic modulus in the range of 30 MPa to 85 MPa, and an elongation in the elastic region of 10% or more. In addition, positive electrode active material layers (thickness: 200 µm) were produced using the positive electrode active material slurries of Samples 7, 8, and 9 corresponding to the binder composites of Samples 7, 8, and 9, respectively. As a result, no cracks or wrinkles were observed in the positive electrode active material layers.

In addition, there was little variation in the thicknesses of the positive electrode active material layers formed using the slurries of Samples 7 to 9.

### (Samples 10, 11, 12, and 13: Comparative Examples)

The binder body formed using the slurry of Sample 10, 11, 12, or 13, which included no binder and included BSH6, F350HC, EP, or BSH12 as CMC, had an elastic modulus of 100 MPa or more. In addition, positive electrode active material layers (thickness: 200 µm) were produced using the positive electrode active material slurries of Samples 10, 11, 12 and 13 corresponding to the binder composites of Samples 10, 11, 12 and 13, respectively. As a result, cracks were observed in the positive electrode active material layers. This is considered to be attributable to the excessively high elastic modulus of the binder composite.

### (Sample 14: Comparative Example)

The binder composite formed using the slurry of Sample 14, which was prepared such that the ratio (a:b) of the solid-content weight *a* of BSH6 as CMC to the solid-content weight *b* of AXA391 as the binder was 1:1, had an elastic modulus of 100 MPa or more and an elongation of 10% or more. In addition, a positive electrode active material layer (thickness: 200 µm) was produced using the positive electrode active material slurry of Sample 14 corresponding to the binder composite of Sample 14. As a result, cracks were observed in the positive electrode active material layer. This is considered to be attributable to the excessively high elastic modulus of the binder composite.

### (Sample 15: Comparative Example)

The binder composite formed using the slurry of Sample 15 including AL1002 (SBR) as the binder and BSH6 as CMC had an elastic modulus of 100 MPa or more, and an elongation in the elastic region of 10% or less. In addition, a positive electrode active material layer (thickness: 200 µm) was produced using the positive electrode active material slurry of Sample 15 corresponding to the binder composite of Sample 15. As a result, cracks were observed in the positive electrode active material layer. This is considered to be attributable to the excessively high elastic modulus and excessively low elongation of the binder composite.

In addition, in the sample in which the elastic modulus of the binder composite was 25 MPa, when the corresponding positive electrode after drying was wound using a roll, the contacting positive electrode active material layer was transferred, resulting in non-uniform thickness of the positive electrode active material layer.

### Production of Lithium-Ion Secondary Battery

The first positive electrode active material powder (lithium iron phosphate; particle size of secondary particles: 16 to 20 µm), the second positive electrode active material powder (lithium iron phosphate; particle size of secondary particles: 2 to 3 µm), CMC (BSH6), and the acrylic polymer binder (aqueous binder, AXA391) were mixed so as to have the respective solid-content compositions shown in Table 3. Water was added to the mixed power and kneaded to prepare positive electrode active material slurries of Working Examples 1 to 7 and Comparative Examples 1 to 4. The positive electrode active material slurries were each applied onto an aluminum foil (positive electrode current collector sheet), and the coating films were dried to form positive electrode active material layers having a thickness of approximately 200 µm on the positive electrode current collector sheets, thereby producing positive electrodes of Working Examples 1 to 7 and Comparative Examples 1 to 4. Table 3 also shows the total percentage of CMC and the aqueous binder in the positive electrode active material layer or in the solid-content composition, as well as the weight proportion (b/a) of the binder (b) relative to CMC (a).

**[Table 3]**

| | Solid-Content Composition | | | | Total Percentage of CMC and Binder | Weight Proportion (b/a) of Binder (b) to CMC (a) | Battery Capacity |
|---|---|---|---|---|---|---|---|
| | First Positive Electrode Active Material | Second Positive Electrode Active Material | CMC | Aqueous Binder | | | |
| Comparative Example 1 | 90 parts by weight | 10 parts by weight | 0.4 parts by weight | 0.6 parts by weight | 0.99 wt% | 1.5 | 129.6 mAh |
| Working Example 1 | 90 parts by weight | 10 parts by weight | 0.4 parts by weight | 1 parts by weight | 1.38 wt% | 2.5 | 141.6 mAh |
| Working Example 2 | 90 parts by weight | 10 parts by weight | 0.4 parts by weight | 1.3 parts by weight | 1.67 wt% | 3.25 | 136.9 mAh |
| Comparative Example 2 | 50 parts by weight | 10 parts by weight | 0.4 parts by weight | 2 parts by weight | 2.34 wt% | 5.0 | 105.1 mAh |
| Comparative Example 3 | 70 parts by weight | 30 parts by weight | 0.4 parts by weight | 0.6 parts by weight | 0.99 wt% | 1.5 | 118.6 mAh |
| Working Example 3 | 70 parts by weight | 30 parts by weight | 0.4 parts by weight | 0.8 parts by weight | 1.19 wt% | 2.0 | 130.8 mAh |
| Working Example 4 | 70 parts by weight | 30 parts by weight | 0.4 parts by weight | 1.0 parts by weight | 1.48 wt% | 2.5 | 132.0 mAh |
| Working Example 5 | 70 parts by weight | 30 parts by weight | 0.4 parts by weight | 1.2 parts by weight | 1.57 wt% | 3.0 | 133.5 mAh |
| Working Example 6 | 70 parts by weight | 30 parts by weight | 0.4 parts by weight | 1.3 parts by weight | 1.67 wt% | 3.25 | 133.4 mAh |
| Working Example 7 | 70 parts by weight | 30 parts by weight | 0.4 parts by weight | 1.4 parts by weight | 1.77 wt% | 3.5 | 131.1 mAh |
| Comparative Example 4 | 70 parts by weight | 30 parts by weight | 0.4 parts by weight | 1.5 parts by weight | 1.86 wt% | 3.75 | 128.7 mAh |

Next, the produced positive electrode, a polyolefin separator, a carbon-based negative electrode, and a non-aqueous electrolyte (a 1M LiPF₆ electrolyte (carbonate-based solvent)) were placed in a coin cell case to produce lithium-ion secondary batteries (coin cells) of Working Examples 1 to 7 and Comparative Examples 1 to 4.

### Charge-Discharge Cycle Test

A charge/discharge cycle test was performed using the lithium-ion secondary batteries of Working Examples 1 to 7 and Comparative Examples 1 to 4. Specifically, a 1C charge-discharge cycle was repeated five times with an upper cutoff voltage of 3.6 V and a lower cutoff voltage of 2.0 V, and the battery capacity (discharge capacity) was calculated based on the discharge in the fifth cycle. The calculated battery capacity is shown in Table 3.

From Table 3, it was found that when the total of the percentage of the aqueous binder and the percentage of CMC in the positive electrode active material layer is set to 1.0 wt% or more and 1.8 wt% or less, the lithium-ion battery exhibits a battery capacity of 130 mAh or more. It was also found that favorable battery characteristics were obtained by setting the proportion (b/a) of the mass (b) of the aqueous binder relative to the mass (a) of CMC included in the positive electrode active material layer to 2.0 or more and 3.5 or less.

### DESCRIPTION OF REFERENCE SIGNS

2: Positive electrode active material layer
3: Positive electrode current collector
5: Positive electrode
11: Battery case
12: Lid member
13: Positive electrode connection member
14: Negative electrode connection member
15: Non-aqueous electrolyte
18a, 18b: External connection terminal
22: electrode assembly
25: Shrink film
30: Lithium-ion secondary battery
32: Negative electrode
34: Separator
36: Negative electrode active material layer
38: Negative electrode current collector

## Claims

1. A positive electrode for a lithium-ion secondary battery, the positive electrode comprising a current collector and a positive electrode active material layer provided on the current collector,
the positive electrode active material layer including lithium iron phosphate particles, an aqueous polymer binder derived from latex, and sodium carboxymethyl cellulose or calcium carboxymethyl cellulose,
the aqueous polymer binder and the sodium carboxymethyl cellulose or calcium carboxymethyl cellulose constituting a binder composite, and
the binder composite having an elastic modulus within a range of 30 to 100 MPa.

2. The positive electrode according to claim 1, wherein an elongation percentage of the binder composite in elastic region is 10% or more.

3. The positive electrode according to claim 1, wherein the polymer binder is an acrylic polymer binder or styrene-butadiene rubber.

4. The positive electrode according to claim 1, wherein a polymer compound included in the polymer binder has a glass transition temperature of 20°C or less.

5. The positive electrode according to claim 1, wherein the positive electrode active material layer has a thickness of 150 µm or more.

6. A lithium-ion secondary battery comprising the positive electrode according to any one of claims 1 to 5, a negative electrode, a separator, and a non-aqueous electrolyte.
